(19) **Europäisches Patentamt**
**European Patent Office**
**Office européen des brevets**

(11) **EP 1 504 427 B1**

(12) **EUROPEAN PATENT SPECIFICATION**

(45) Date of publication and mention
of the grant of the patent:
**02.03.2011 Bulletin 2011/09**

(51) Int Cl.:
*G08B 13/194* (2006.01)   *G08B 13/196* (2006.01)
*G06T 7/00* (2006.01)   *G01V 8/10* (2006.01)

(21) Application number: **03723561.1**

(22) Date of filing: **25.04.2003**

(86) International application number:
**PCT/SE2003/000666**

(87) International publication number:
**WO 2003/091961 (06.11.2003 Gazette 2003/45)**

(54) **SENSOR ARRANGEMENT AND METHOD FOR CALIBRATING THE SAME**

SENSORANORDNUNG UND VERFAHREN ZU IHRER KALIBRATION

ENSEMBLE CAPTEUR ET PROCEDE DE CALIBRAGE DE CE DERNIER

(84) Designated Contracting States:
**AT BE BG CH CY CZ DE DK EE ES FI FR GB GR HU IE IT LI LU MC NL PT RO SE SI SK TR**

(30) Priority: **25.04.2002 SE 0201243**
**21.05.2002 US 382870 P**

(43) Date of publication of application:
**09.02.2005 Bulletin 2005/06**

(73) Proprietor: **Secumanagement B.V.**
**2260 AD Leidschendam (NL)**

(72) Inventors:
• **HEYDEN, Anders**
**S-240 10 Dalby (SE)**
• **SJÖ, Eva**
**S-247 31 Södra Sandby (SE)**

• **BENCKERT, Henrik**
**S-212 13 Malmö (SE)**

(74) Representative: **Milanov, Nina Vendela Maria et al**
**Awapatent AB**
**P.O. Box 5117**
**200 71 Malmö (SE)**

(56) References cited:
**DE-A1- 4 430 016   US-A- 4 249 207**
**US-A- 5 099 324   US-B1- 6 339 375**

• **PETROU MARIA ET AL.: 'Image Processing: The Fundamentals', 1999, JOHN WILEY & SONS LTD., CHICHESTER, ISBN 0-471-99883-4 pages 302 - 303, XP002904980**

**Description**

Field of the Invention

The present invention relates to the field of image processing for calibrating a sensor unit, specifically by defining a subarea in an image of a monitored area, the subarea being associated with a given object belonging to the monitored area.

Background Art

Sensor units recording and analyzing digital images are today used in monitoring in many different applications, such as in security surveillance, anti-theft control, and nursing. The area which is monitored by the sensor unit and of which it records images is called the monitored area. The monitored area can be divided into various subareas, and different criteria or processing instructions may apply to the various subareas, which may also be processed using different algorithms. A subarea of the monitored area may be associated with an object, such as a painting. In this example, the subarea in a recorded image of the monitored area may be processed in such a manner that a change in this subarea is to be detected. A change in the subarea may be an indication that someone is trying to steal and, thus, move the painting from its place.

The position of the subarea or subareas must be defined in the recorded image and possibly also be updated successively during operation, if, for instance, someone should bump against the sensor unit.

A prior-art method of setting or defining a subarea is to place the sensor unit in an exactly predetermined position and orientation relative to an object which has been elected to form a subarea. The exact size, shape and location of the object in the image is known and, thus, the object can be localized. A drawback of this method is that there is no flexibility in connection with installation. If a deviation from the predetermined conditions occurs, i.e. from the exact orientation of the sensor unit relative to the object or in the object's dimensions, the image analysis cannot cope with this. A deviation may thus cause erroneous monitoring results and, thus, unreliable monitoring.

Another prior-art method is disclosed in WO 96/06368 and involves an operator using some kind of user interface, such as a monitor or touch screen, to manually define subareas to be associated with different monitoring instructions. A drawback of this method is that extra equipment is required, thereby increasing the cost and making installation more complicated and more time-consuming. Since the installation requires exactness, there is also a great risk of an operator making a mistake during installation. A further drawback is that if the sensor unit, or an object to be monitored in the subarea, leaves its exact position, monitoring will be erroneous until someone arrives and manually sets the new position of the subarea.

Another method of solving this problem is disclosed in Applicant's International Patent Application No. PCT/SE02/01753, published as WO03/027977.

Summary of the Invention

An object of the present invention therefore is to solve the above problems and thus provide a method and a sensor arrangement for simple and reliable setting of one or more subareas in a monitored area.

This and other objects that will be apparent from the following description have now been achieved, completely or at least partially, by means of a method and sensor arrangements according to the independent claims. Preferred embodiments are defined in the dependent claims.

According to a first aspect, the invention relates to a method in image processing for calibrating a sensor unit, by defining a subarea in an image of a monitored area captured by the sensor unit, the subarea being associated with a given object belonging to the monitored area, comprising the steps of: identifying the given object in the image, and defining the subarea based on the location of the given object in the image, so that the sensor unit is calibrated by automatic localization of the subarea in the image.

The inventive method of calibrating the sensor unit may be effected on installation or periodically during operation. Thus, the defining of one or more subareas according to the invention can take place in the installation of a sensor unit, or it can be carried out if the sensor is intentionally moved or if someone unintentionally happens to bump against it, so that the monitored area within the image is changed. The monitored area is the area that is recorded by the sensor and limited by the optics belonging to the sensor.

In one application example, the given object with which the subarea is associated is a bed. This may be useful, for instance, in monitoring old people, disabled persons, or sick persons. The monitoring process can be arranged to set off an alarm if a person is detected outside the position of the bed.

In another application example, the given object is a road which is to be monitored. Different instructions may then apply to the subarea which is associated with the road and the region outside this subarea in the monitored area.

In a further application example, the subarea essentially coincides with a given object in the form of a door, and different criteria regarding, for instance, controlling of door opening/door closing may apply in the subarea and in the area outside the subarea, respectively.

A general advantage of the inventive method is that it allows easy installation of the sensor unit and any associated equipment. Little knowledge is required, and if for instance the method is used in a sensor unit employed in a nursing home, the nursing staff can make the installation themselves in a room where a patient is positioned who needs monitoring according to the example mentioned above. As a result, the method allows for flexibility since, for instance in the above-mentioned nursing application, the sensor unit and any associated equipment can easily be moved and installed in another room.

When using this method, the installation will be more cost-efficient since it does not require any extra calibration equipment or a specially trained operator.

One more advantage of the method is that the subarea(s) can be updated during operation, which results in more reliable monitoring. There is no need for an active action by a person for updating the position of the subarea, which thus may occur automatically.

It is possible to define several subareas in a monitored area by identifying different objects in the monitored area. Alternatively or additionally, several subareas may be defined with respect to one and the same given object.

In one embodiment, the given object is identified in an object search area which is a limited part of the monitored area and within which at least part of the object is expected to be located. Thus, the object search area indicates approximately where the entire object or only parts, such as corners, edges or contours, of the object can be localized.

The object search area can be of different shapes and sizes. It may be represented as a line or several lines, and the object search area can be a limited area within a predetermined distance from each line.

When two or more given objects are identified to define different subareas, two or more object search areas may be defined. Such object search areas may partially overlap each other.

According to one embodiment, the step of identifying the object comprises the step of identifying the object's delimitation in the object search area.

The object search area can also be stated as a range within which the delimitation of the given object is searched. It is sufficient if parts of the delimitation of the object will be within the object search area. To find the delimitation of the given object in the object search area, different algorithms, such as edge detection, contour detection or corner detection, may be used. It is sufficient to find a number of points on the given object for its delimitation to be defined.

In one embodiment, the inventive method comprises the initial step of obtaining the dimensions of the object search area. In this context, the dimensions may include data on both shape and size.

The dimensions of the object search area can be entered upon installation, which is advantageous since it makes the method flexible and useful in various environments and applications. Alternatively, the dimensions may be entered during manufacture if the field of application and the given object are known. It may also be possible to select different preset dimensions of the object search area according to the given object which is to be localized. This is advantageous since it makes installation of the sensor unit according to the invention quick.

In one embodiment, the step of obtaining the dimensions of the object search area further comprises the step of obtaining the dimensions of a standard object, whereupon the object search area is dimensioned based on the standard object.

The delimitation of the standard object indicates an ideal position of the given object in the image. The actual position of the given object will probably deviate from the ideal position. However, it may be assumed that the actual position is in the vicinity of the ideal position. An advantage of using a standard object is that a good starting point for searching the given object is obtained.

In one embodiment, the dimensions of the standard object are represented by means of boundary lines, and the object search area is dimensioned to encompass a predetermined distance to the respective boundary lines.

The object search area can be dimensioned based on the standard object in an ideal position as a starting guess. The standard object is said to have boundary lines which may relate to, for example, relevant edges of the object. The edges of the given object to be identified probably deviate from those of the standard object since the dimensions of the standard object are based on an assumption on the positional arrangement of the sensor unit. It is a condition, however, that the deviation is limited and that it is possible to use algorithms to find the boundary lines of the given object in the vicinity of the boundary lines of the standard object. The delimitation of the given object may be searched in the object search area.

The predetermined distance from each boundary line can be a predetermined number of pixels.

In one embodiment of the method, the step of identifying the given object comprises the steps of calculating, for a number of pixels along the respective boundary lines, the derivative of pixels within a given distance from and perpendicular to the respective boundary lines, selecting the respective pixels with the greatest derivative as an edge pixel, and interconnecting the edge pixels found for each boundary line, which interconnected edge pixels indicate the delimitation of the given object.

An advantage of using edge detection is that this algorithm does not require much processor power and that it is easy to implement. A further advantage is that the method will be more robust.

In one embodiment, the inventive method comprises an initial step of receiving an indication on the shape of the given object, and a subsequent step of adjusting the subarea to said shape. Here, the subarea essentially coincides with the given object as identified. A general advantage of this embodiment is that the subarea is defined in an exact and correct manner. Wrong decisions, if any, in individual pixels of the image can be corrected. The operator may be prompted to input data on the shape of the given object before initiating the step of defining the subarea. Alternatively, the shape may be pre-stored in a non-volatile memory of the sensor unit. The shape may be given by the above-mentioned standard object, but the embodiment may also be used generally in the identification of the given object, i.e. without the use of a standard object and/or an object search area.

According to a second aspect, the invention relates to a computer program which is stored on a computer-readable memory medium comprising instructions for causing a computer to carry out the method according to the first aspect of the invention.

According to a third aspect, the invention relates to a sensor arrangement for capturing images of a monitored area which includes at least one subarea, said subarea being associated with a given object in the monitored area and being assigned dedicated monitoring instructions, said sensor arrangement comprising a camera unit for capturing said images; a processing unit for processing said images according to said monitoring instructions; and a calibration unit which is operable to identify said given object in at least one of said images, and to localize said at least one subarea based on the location of said given object in said at least one image.

The calibration unit may be arranged to carry out the method according to the first aspect.

Thus, the features and advantages given above in relation to the first aspect are equally applicable to the computer program and the sensor arrangement according to the second and third aspects, respectively.

In one embodiment, the camera unit is mounted within a sensor positioning area, which is defined in association with the monitored area such that the orientation of the camera unit relative to the object approximates a desired orientation.

The sensor positioning area is an area within which the camera unit is arranged so as to have an approximate orientation with respect to the monitored scene. Thereby, the image variability in dimensions and location of the given object is constrained, which facilitates the identification of the given object, and thus the localization of the subarea. When the camera unit is arranged in the sensor positioning area, the position and orientation of the camera unit relative to the object may be taken into consideration. The sensor positioning area is preferably defined as a three-dimensional area, for example an extent in a horizontal plane and a range of heights.

In another embodiment, the sensor arrangement comprises a memory which is operable to store the dimensions of the object search area, wherein the calibration unit, in defining the search object area, is operable to retrieve the dimensions from the memory. These dimensions may be stored and determined in advance, for example during manufacture. Alternatively or additionally, the dimensions may be set during the installation, based on e.g. the shape and size of the given object which is to be localized.

The camera unit, the calculation unit and the calibration unit may be located in one and the same physical enclosure, thereby forming a sensor unit with built-in intelligence.

Brief Description of the Drawings

The invention will be now described in more detail with reference to the accompanying schematic drawings which by way of example illustrate various embodiments of the invention.

> Fig. 1 is a block diagram of a sensor unit according to the invention.
> Fig. 2a is a top plan view showing the location of the sensor unit relative to the object according to an embodiment of the present invention.
> Fig. 2b is a side view showing the location of the sensor unit relative to the object according to an embodiment of the present invention.
> Fig. 2c is an end view showing the location of the sensor unit relative to the object according to an embodiment of the present invention.
> Fig. 3 is a schematic flow chart of the method according to an embodiment of the present invention.
> Fig. 4 shows schematically the monitored area to elucidate the relationship between the object (solid line), the standard object (broken line) and object search area (dotted line).

Description of Preferred Embodiments

An embodiment of the invention will be described below, which comprises a sensor unit and may be used in nursing to monitor a person lying in a hospital bed.

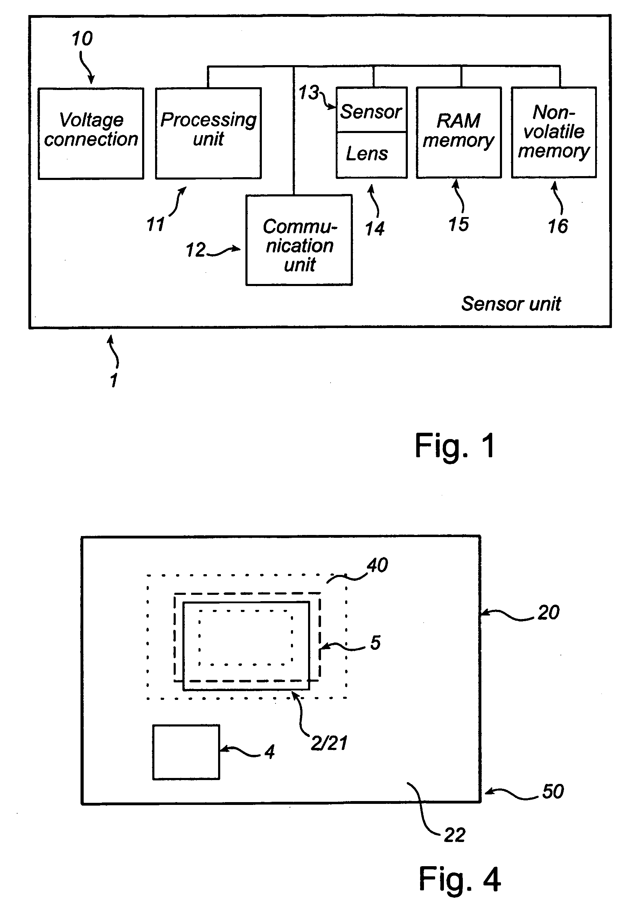

Fig. 1 is block diagram of the hardware in the sensor unit. The sensor unit 1 is supplied with a voltage via a voltage connection 10. Moreover the sensor unit 1 comprises a powerful processing unit 11 which can be implemented as a commercially available microprocessor such as a CPU (Central Processing Unit), a DSP (Digital Signal Processor) or some other programmable logical units such as an FPGA (Field-Programmable Gate Array), or alternatively as an ASIC (Application-Specific Integrated Circuit), as discrete analog and digital components or by a combination thereof.

The sensor unit may also comprise a communication unit 12. The communication unit 12 is adapted for tethered or wireless communication, for instance using IR light, radio waves or ultrasound, with an external unit. The external unit may be, for example, an emergency medical alarm with a loudspeaker which, for instance, may be arranged to emit sound if a movement is detected outside the bed. Alternatively, the external unit can be a decision engine which, based on different criteria and the information sent to the decision engine from the sensor unit 1, makes a decision about a possible further action. The amount of logics that is to be available in the sensor unit 1 and the external unit, respectively, is due to different factors, such as processor power in the sensor unit, and may be determined from one application to another.

The sensor unit 1 further comprises a light-sensitive sensor 13, for instance a CCD or CMOS sensor, for capturing images. The sensor 13 is integrated on a printed circuit board and has an associated lens assembly 14. The lens in the lens assembly may have, for instance, an aperture angle of 130 degrees.

Moreover, the sensor unit 1 comprises a RAM memory 15. The sensor unit 1 uses an operating system and may carry out advanced image processing. The sensor unit 1 also comprises a non-volatile memory 16 for storage of calculation code and other data, such as calculation results.

All the components included in the sensor unit 1 may be integrated on a printed circuit board. The advantage of this is that the sensor unit 1 will be very stable, i.e. it will be less sensible to noise sources and has fewer points at which sabotage and malfunction can take place.

The algorithms for the calibration functionality, as will be described below, are stored in the non-volatile memory 16.

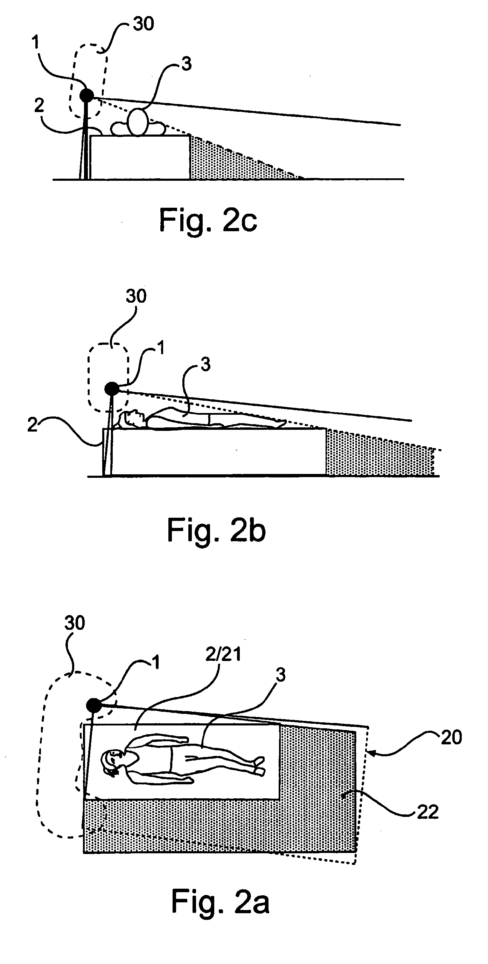

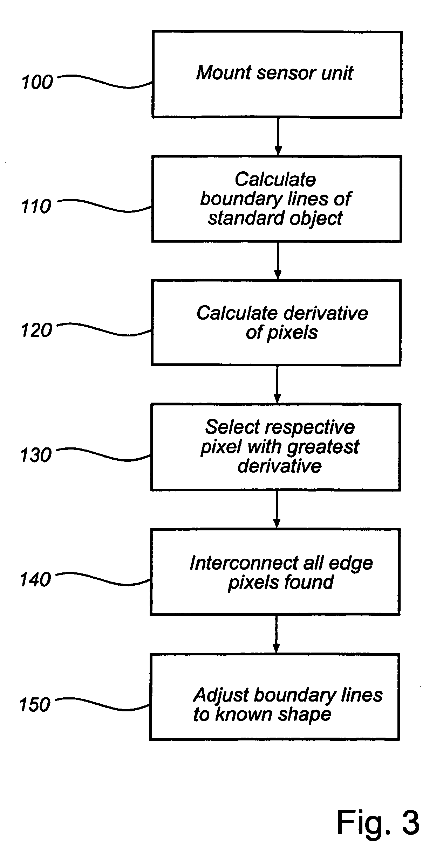

Figs 2a-2c illustrate the location of the sensor unit 1 in relation to the bed from different angles. The method according to the invention will now be described with reference to Figs 2a-2c, to the flow chart in Fig. 3 and to Fig. 4, in which the imagined areas, as will be explained below, have been marked in a recorded image 50 in order to elucidate the description.

The sensor unit 1 is adapted to capture and record images of a monitored area 20 (Fig. 4). The monitored area 20 comprises the major part of the bed 2 and an area close to the bed. Figs 2a-2c illustrate a person 3 lying on the bed 2. The person 3 on the bed 2 may, for instance, suffer from dementia and must therefore be monitored so that he or she does not get out of bed and goes astray and thus risks getting hurt. It may also be desirable to monitor the person 3 in the bed 2 so that he or she does not fall out of the bed. If that happens, it is important that an alarm be emitted to alert the nursing staff. A possible criterion for an alarm to be emitted in one of the above situations may therefore be that movement is detected in the area outside the bed, whereas no movement detection takes place within the bed. Another possible criterion may be to monitor that there is continuously a person 3 in the area occupied by the bed 2. Thus, the monitored area 20 may be divided into smaller areas or subareas within which different criteria apply. In Figs 2 and 4, reference numeral 21 identifies such a subarea which essentially coincides with the bed, and reference numeral 22 identifies another subarea which is made up of the remainder of the monitored area.

In installing the sensor unit 1, an operator mounts, step 100 in Fig. 3, the sensor unit 1 using a fastening device (not shown). The sensor unit 1 is mounted within a predetermined sensor positioning area or region 30, which is indicated in Figs 2a-2c, and at a level which is determined to be between 100 and 200 cm. The range in height is selected so that the person 3 in the bed 2 essentially does not conceal any of the edges of the bed, as seen from the sensor unit 1, cf. Figs 2b and 2c. The horizontal extent of the sensor positioning area 30, which is shown in Fig. 2a, is selected so that the sensor unit 1 may have an approximate direction relative to the bed 2 and so that practically the entire bed 2 and also an area outside the bed 2 are included in the monitored area 20. The operator also directs the sensor unit 1 so that the recorded images essentially encompasses the desired scene to be monitored. There may be provided a frame (not shown) which allows the sensor unit only to be mounted at an acceptable height and horizontal position.

The sensor unit 1 now automatically defines or.sets the subarea 21, which essentially corresponds to the bed 2 in the monitored area 20 according to the following method.

As a starting point for localizing the bed 2 in the monitored area, use is made of a standard object 5, which in Fig. 4 is indicated with a broken line, in an ideal position. The boundary lines of the standard object 5 in the image may be calculated (step 110) using the camera equation below. This step can be carried out for each installation, but it can also be pre-calculated, with the result being stored in the non-volatile memory 16.

Using the camera equation, it is calculated how the bed in the room is imaged on the sensor 13, i.e. the location, shape and size of the bed in an image captured by the sensor unit 1. By boundary lines is here meant relevant edges of the object, which in this embodiment is the bed 2.

$X_i$ is an arbitrary 3D point which is represented in homogeneous form, i.e. a 4x1 vector of the type (x y z 1). The arrangement of the sensor unit 1, i.e. position and orientation, relative to the coordinate system of the room, i.e. also relative to the object, is assumed to be known. Then, the sensor point $x_i$ on which the 3D room point $X_i$ is imaged may be calculated according to the camera equation:

$$\lambda * x_i = P X_i$$

wherein $\lambda$ is a scale factor, $x_i$ is the image coordinate in homogeneous form (3x1 vector/matrix of the type (x y 1)), and P is the so-called camera matrix which can be written as follows:

$$P = K[R \mid -Rt]$$

Here, K is a 3x3 matrix which is made up of the so-called inner parameters of the sensor unit 1. These inner parameters are focal length, principal point, shear and aspect ratio. t is a 3x1 vector which designates the position of the sensor unit relative to the object and R is a 3x3 matrix which describes the orientation of the sensor unit relative to the object. Thus, P is a 3x4 matrix. The easiest method is to use a coarse calibration of the sensor unit 1, which means that K is known. Alternatively or additionally, some of the inner parameters may be estimated. The sensor positioning area 30 being specified in advance gives the approximate location t and orientation R.

The boundary lines of the bed 2 in the image probably deviate from the boundary lines of the standard object 5 since its size, shape and/or location relative to the sensor unit 1 may deviate when, according to the conditions, it is assumed that the approximate size and location are known. However, it is assumed that the deviation is limited. Fig. 4 shows this deviation between the actual object, which is indicated with a solid line, and the standard object 5, which is indicated with a broken line.

The boundary lines of the bed 2 are calculated by edge detection as follows. The edge detection is initiated with the step 120 of calculating, for a number of pixels along the respective boundary lines of the standard object 5, the derivative of pixels within a limited distance and perpendicular to the boundary line. In a specific example, the limited distance is 10 pixels on both sides of the standard object. The limited distance indicates the dimensions of an estimation area or object search area 40, which is the area between the two dotted rectangles in Fig. 4. The limited distance may in some embodiments extend on only one side of the standard object, and/or non-perpendicularly with respect to the boundary line. Then in step 130, each pixel with the greatest derivate, as seen perpendicular to the boundary line, is selected as an edge pixel. In step 140, all found edge pixels of the respective boundary lines are connected with a least square estimate. Finally, it is also utilized that the basic shape of the bed 2 is known and in step 150 the boundary lines are adjusted to this shape. In this way, the subarea 21 and/or the subarea 22 is obtained, which each is associated with the bed 2. In Fig. 4 there is also a bedside table 4. The bedside table 4 will not affect the setting of the subarea since it is standing outside the object search area 40.

The above method may thus be employed in image processing for setting a subarea in a recorded image of a monitored area, the subarea being associated with an object in the monitored area. The method comprises a step of localizing in the recorded image the object in an estimation area which is a limited part of the monitored area and within which at least part of the object is expected to be located, the localized object indicating the subarea.

The foregoing description is presented for purposes of illustration and description. It is not exhaustive and does not limit the invention to the precise form disclosed. Modifications and variations are possible in light of the above teachings or may be acquired from practicing the invention. The scope of the invention is defined by the claims and their equivalents.

For example, the method for setting the subarea can also be used when the sensor unit is in operation. The position of the subarea in the image may be changed, for instance, owing to the fact that someone bumps against the sensor unit or if the position of the object is changed. Updating of the position of the subarea may take place at regular intervals, for instance once a minute. The method may be carried out on a current captured image.

It is possible to divide the monitored area into several subareas. In the example of monitoring a bed (Fig. 2), after setting the subarea 21, which essentially coincides with the bed, and the subarea 22, which includes the remainder of the monitoring area, it can be pre-decided that also a further subarea within a predetermined distance from the delimitation of the subarea 21 is to be associated with a set of monitoring instructions. For example, while subarea 21 is to be monitored for the presence of a person, and subarea 22 is to be monitored for movement, the further subarea is to be excluded from any monitoring. Such a further subarea can correspond to a bedside table positioned close to the bed, a window, a door, a door opening, a television apparatus, etc.

Thus, several subareas can be set automatically. If standard objects are used, more than one standard object may be used in defining the subareas.

Each subarea may be essentially coincident with the respective object, or be arranged with a given spacing thereto. Similarly, the size and/or shape of each subarea may essentially correspond to that of the respective object, or be given by data pre-stored in the non-volatile memory. It conceivable that the sensor unit calculates, based on the location and/or size and/or shape of the identified actual object in relation to that of the standard object, the actual location and orientation of the sensor unit (e.g. given by t and R in the above camera equation), and uses such calculated data to modify the pre-stored data before defining the location and/or size and/or shape of each subarea.

If an object is located partly outside the object search area, the sensor unit does not detect the entire object. The sensor unit may define a corresponding subarea by using previously stored information about the shape and/or size of the subarea if a sufficiently large part of the object has been detected. The sensor unit can also be adapted to let the delimitation of the subarea be the outer or inner delimitation of the object search area when parts of an object are not localized.

If no object is localized in the object search area, the sensor unit may be adapted to let the subarea constitute a previously determined subarea or emit an alarm which thus makes an operator observe that setting of the subarea has failed.

It should also be noted that the sensor unit could be in the form of an arrangement of a separate camera unit, including at least a sensor and a lens system and being adapted to output images, and a separate calculation unit, including at least a processing unit and a memory and being adapted to receive and process the images from the camera unit. In this case, the above-described calibration functionality may be included in the calculation unit.

**Claims**

1. A method in image processing for calibrating a sensor unit (1), by defining at least one subarea (21) in an image (50) of a monitored area (20) captured by the sensor unit (1) comprising a camera unit (13, 14), said subarea (21) being associated with a given object (2) belonging to the monitored area (20), comprising the steps of:

   estimating an approximate orientation of the camera unit (13, 14),
   obtaining the dimensions of a standard object (5) that corresponds to said given object,
   defining, based on said dimensions and said approximate orientation, an object search area (40) which is a limited part of the monitored area (20) and within which at least part of the object is expected to be located,
   identifying the given object (2) in said object search area (40) in said image, and
   automatically defining said at least one subarea (21) based on the location of the given object (2) in the image (50).

2. The method as claimed in claim 1, wherein the given object (2) is essentially stationary.

3. The method as claimed in claim 1 or 2, wherein the given object (2) has a known geometry, and wherein the given object is identified based on said known geometry.

4. The method as claimed in any one of the preceding claims, wherein the given object (2) is identified in the object search area (40) which is a limited part of the monitored area (20) and within which at least part of the object is expected to be located.

5. The method as claimed in claim 4, wherein the step of identifying the given object (2) comprises the step of identifying the object's delimitation in the object search area (40).

6. The method as claimed in claim 4 or 5, further comprising the initial step of obtaining the dimensions of the object search area (40).

7. The method as claimed in claim 6, wherein the step of obtaining the dimensions of the object search area (40) further comprises the step of obtaining the dimensions of the standard object (5), the object search area (40) being dimensioned based on the standard object.

8. The method as claimed in claim 7, wherein the dimensions of the standard object (5) are represented by boundary lines, and the object search area (40) is dimensioned to encompass a predetermined distance to the respective boundary lines.

9. The method as claimed in claim 8, wherein the step of identifying the given object (2) comprises the steps of calculating, for a number of pixels along the respective boundary lines, the derivative of pixels within a given distance from and perpendicular to the respective boundary lines; selecting the respective pixels with the greatest derivative as an edge pixel; and interconnecting the edge pixels found for each boundary line, which interconnected edge pixels indicate the delimitation of the given object (2).

10. The method as claimed in any one of the preceding claims, further comprising an initial step of receiving an indication of the shape of the given object (2), and a subsequent step of adjusting the subarea (21) to said shape.

11. The method as claimed in any one of the preceding claims, wherein the object (2) is a bed, preferably a hospital bed.

12. A computer program which is stored on a computer-readable memory medium comprising instructions for causing a computer to carry out the method as claimed in anyone of claims 1-11.

13. A sensor arrangement for capturing images (50) of a monitored area (20) which includes at least one subarea (21), said subarea (21) being associated with a given object in the monitored area (20) and being assigned dedicated monitoring instructions, said sensor arrangement comprising a camera unit (13, 14) for capturing said images (50); a calculation unit for processing said images (50) according to said monitoring instructions; and a calibration unit which is operable to:

   estimate an approximate orientation of the camera unit (13, 14);
   obtain the dimensions of a standard object (5) that corresponds to said given object,
   define, based on said dimensions and said approximate orientation, an object search area (40) which is a limited part of the monitored area (20) and within which at least part of the given object is expected to be located,
identify the given object (2) in said object search area (40) in one of said images, and
automatically define said at least one subarea (21) based on the location of the given object (2) in the image (50).

14. The sensor arrangement as claimed in claim 13, wherein the calibration unit (11) is operable to define the object search area (40) which is a limited part of the monitored area (20) and within which at least part of the object is expected to be located, and to identify the given object (2) in said object search area (40).

15. The sensor arrangement as claimed in claim 14, further comprising a memory (16) which is operable to store the dimensions of the object search area (40), wherein the calibration unit (11), in defining said search object area (40), is operable to retrieve said dimensions from said memory (16).

16. The sensor arrangement as claimed in claim 13, 14 or 15, wherein the camera unit (13, 14) is mounted within a sensor positioning area (30), which is defined in association with the monitored area (20) such that the arrangement of the camera unit (13, 14) relative to the object (2) approximates a desired arrangement.

17. The sensor arrangement as claimed in anyone of claims 13-16, wherein said camera unit, said calculation unit and said calibration unit are located in one and the same physical enclosure.


**Patentansprüche**

1. Verfahren in der Bildverarbeitung zum Kalibrieren einer Sensoreinheit (1) durch Definieren wenigstens eines Teilbereichs (21) in einem Bild (50) eines überwachten Bereichs (20), welches durch die Sensoreinheit (1) erfasst wird, die eine Kamera-Einheit (13, 14) umfasst, wobei der Teilbereich (21) einem gegebenen Objekt (2) zugeordnet ist, welches zu dem überwachten Bereich (20) gehört, umfassend die Schritte:

    Schätzen einer genäherten Ausrichtung der Kamera-Einheit (13, 14),
    Ermitteln der Abmessungen eines Standardobjekts (5), welches dem gegebenen Objekt entspricht,
    Definieren, auf Basis der Abmessungen und der genäherten Ausrichtung, eines Objekt-Suchbereichs (40), welcher ein eingegrenzter Teil des überwachten Bereichs (20) ist, und wobei erwartet wird, dass sich wenigstens ein Teil des Objekts in demselben befindet,
Identifizieren des gegebenen Objekts (2) in dem Objekt-Suchbereich (40) in dem Bild, und automatisches Definieren des wenigstens einen Teilbereichs (21) auf Basis der Position des gegebenen Objekts (2) in dem Bild (50).

2. Verfahren nach Anspruch 1, wobei das gegebene Objekt (2) im Wesentlichen still steht.

3. Verfahren nach Anspruch 1 oder 2, wobei das gegebene Objekt (2) eine bekannte geometrische Form aufweist, und wobei das gegebene Objekt auf Basis der bekannten geometrischen Form identifiziert wird.

4. Verfahren nach einem der vorhergehenden Ansprüche, wobei das gegebene Objekt (2) in dem Objekt-Suchbereich (40) identifiziert wird, welcher ein eingegrenzter Teil des überwachten Bereichs (20) ist, und wobei erwartet wird, dass sich wenigstens ein Teil des Objekts in demselben befindet.

5. Verfahren nach Anspruch 4, wobei der Schritt des Identifizierens des gegebenen Objekts (2) den Schritt des Identifizierens der Grenzen des Objekts in dem Objekt-Suchbereich (40) umfasst.

6. Verfahren nach Anspruch 4 oder 5, ferner umfassend den ersten Schritt des Ermittelns der Abmessungen des Objekt-Suchbereichs (40).

7. Verfahren nach Anspruch 6, wobei der Schritt des Ermittelns der Abmessungen des Objekt-Suchbereichs (40) ferner den Schritt des Ermittelns der Abmessungen des Standard-Objekts (5) umfasst, wobei der Objekt-Suchbereich (40) auf Basis des Standardobjekts dimensioniert wird.

8. Verfahren nach Anspruch 7, wobei die Abmessungen des Standard-Objekts (5) durch Randlinien dargestellt werden, und der Objekt-Suchbereich (40) derart dimensioniert wird, dass er eine vorbestimmte Entfernung zu den jeweiligen Randlinien umschließt.

9. Verfahren nach Anspruch 8, wobei der Schritt des Identifizierens des gegebenen Objekts (2) die Schritte umfasst: Berechnen, für eine Anzahl an Pixeln entlang der jeweiligen Randlinien, der Ableitung von Pixeln innerhalb eines gegebenen Abstands von und rechtwinkelig zu den jeweiligen Randlinien; Auswählen der jeweiligen Pixel mit der größten Ableitung als Kantenpixel; und Verbinden der Kantenpixel, welche für jede Randlinie gefunden werden, wobei die verbundenen Kantenpixel die Grenzen des gegebenen Objekts (2) angeben.

10. Verfahren nach einem der vorhergehenden Ansprüche, ferner umfassend einen ersten Schritt des Empfangens einer Angabe der Form des gegebenen Objekts (2), und einen darauffolgenden Schritt des Anpassens des Teilbereichs (21) an die Form.

11. Verfahren nach einem der vorhergehenden Ansprüche, wobei das Objekt (2) ein Bett ist, vorzugsweise ein Krankenhausbett.

12. Computerprogramm, welches auf einem computerlesbaren Speichermedium gespeichert ist, umfassend Anweisungen zum Bewirken, dass ein Computer das Verfahren nach einem der Ansprüche 1-11 ausführt.

13. Sensoranordnung zum Erfassen von Bildern (50) eines überwachten Bereichs (20), welcher wenigstens einen Teilbereich (21) umfasst, wobei der Teilbereich (21) einem gegebenen Objekt in dem überwachten Bereich (20) zugeordnet ist, und wobei ihm eigene Überwachungsanweisungen zugewiesen sind, wobei die Sensoranordnung eine Kamera-Einheit (13, 14) umfasst, zum Erfassen der Bilder (50); eine Berechnungseinheit zum Verarbeiten der Bilder (50) entsprechend den Überwachungsanweisungen; und eine Kalibrierungseinheit, die geeignet ist zum:

Schätzen einer genäherten Ausrichtung der Kamera-Einheit (13, 14);
Ermitteln der Abmessungen eines Standardobjekts (5), welches dem gegebenen Objekt entspricht;
Definieren, auf Basis der Abmessungen und der genäherten Ausrichtung, eines Objekt-Suchbereichs (40), welcher ein eingegrenzter Teil des überwachten Bereichs (20) ist, und wobei erwartet wird, dass sich wenigstens ein Teil des Objekts in demselben befindet;
Identifizieren des gegebenen Objekts (2) in dem Objekt-Suchbereich (40) in einem der Bilder; und
automatisches Definieren des wenigstens einen Teilbereichs (21) auf Basis der Position des gegebenen Objekts (2) in dem Bild (50).

14. Sensoranordnung nach Anspruch 13, wobei die Kalibrierungseinheit (11) geeignet ist zum Definieren des Objekt-Suchbereichs (40), welcher ein eingegrenzter Teil des überwachten Bereichs (20) ist, und wobei erwartet wird, dass sich wenigstens ein Teil des Objekts in demselben befindet, und zum Identifizieren des gegebenen Objekts (2) in dem Objekt-Suchbereich (40).

15. Sensoranordnung nach Anspruch 14, ferner umfassend einen Speicher (16), welcher geeignet ist zum Speichern der Abmessungen des Objekt-Suchbereichs (40), wobei die Kalibrierungseinheit (11), beim Definieren des Objekt-Suchbereichs (40), geeignet ist, die Abmessungen aus dem Speicher (16) abzurufen.

16. Sensoranordnung nach Anspruch 13, 14 oder 15, wobei die Kamera-Einheit (13, 14) innerhalb eines Sensor-Positionierungsbereichs (30) befestigt ist, welcher im Zusammenhang mit dem überwachten Bereich (20) definiert ist, derart, dass die Anordnung der Kamera-Einheit (13, 14) relativ zu dem Objekt (2) einer gewünschten Anordnung genähert ist.

17. Sensoranordnung nach einem der Ansprüche 13 bis 16, wobei die Kamera-Einheit, die Berechnungseinheit und die Kalibrierungseinheit sich in ein und demselben physischen Gehäuse befinden.

**Revendications**

1. Procédé en traitement d'images pour calibrer une unité de capteur (1), en définissant au moins une sous-zone (21) dans une image (50) d'une zone surveillée (20) capturée par l'unité de capteur (1) comprenant une unité de caméra (13, 14), ladite sous-zone (21) étant associée à un objet donné (2) appartenant à la zone surveillée (20), comprenant les étapes de:

l'estimation d'une orientation approximative de l'unité de caméra (13, 14),
l'obtention des dimensions d'un objet standard (5) qui correspond au dit objet donné,
la définition, sur la base desdites dimensions et de ladite orientation approximative, d'une zone de recherche d'objet (40) qui est une partie limitée de la zone surveillée (20) et à l'intérieur de laquelle au moins une partie de l'objet est censée se trouver,
l'identification de l'objet donné (2) dans ladite zone de recherche d'objet (40) dans ladite image, et
la définition automatique de ladite au moins une sous-zone (21) sur la base de l'emplacement de l'objet donné (2) dans l'image (50).

2. Procédé selon la revendication 1, dans lequel l'objet donné (2) est sensiblement immobile.

3. Procédé selon la revendication 1 ou 2, dans lequel l'objet donné (2) a une géométrie connue, et dans lequel l'objet donné est identifié sur la base de ladite géométrie connue.

4. Procédé selon l'une quelconque des revendications précédentes, dans lequel l'objet donné (2) est identifié dans la zone de recherche d'objet (40) qui est une partie limitée de la zone surveillée (20) et à l'intérieur de laquelle au moins une partie de l'objet est censée se trouver.

**5.** Procédé selon la revendication 4, dans lequel l'étape d'identification de l'objet donné (2) comprend l'étape d'identification de la délimitation de l'objet dans la zone de recherche d'objet (40).

**6.** Procédé selon la revendication 4 ou 5, comprenant en outre l'étape initiale de l'obtention des dimensions de la zone de recherche d'objet (40).

**7.** Procédé selon la revendication 6, dans lequel l'étape d'obtention des dimensions de la zone de recherche d'objet (40) comprend en outre l'étape de l'obtention des dimensions de l'objet standard (5), la zone de recherche d'objet (40) étant dimensionnée sur la base de l'objet standard.

**8.** Procédé selon la revendication 7, dans lequel les dimensions de l'objet standard (5) sont représentées par des lignes de frontière, et la zone de recherche d'objet (40) est dimensionnée pour englober une distance prédéterminée jusqu'aux lignes de frontière respectives.

**9.** Procédé selon la revendication 8, dans lequel l'étape d'identification de l'objet donné (2) comprend les étapes du calcul, pour un nombre de pixels le long des lignes de frontière respectives, de la dérivée des pixels à une distance donnée des lignes de frontière respectives et perpendiculaires à celles-ci ; la sélection des pixels respectifs avec la plus grande dérivée en tant que pixels de bord; et l'interconnexion des pixels de bord trouvés pour chaque ligne de frontière, les pixels de bord interconnectés indiquant la délimitation de l'objet donné (2).

**10.** Procédé selon l'une quelconque des revendications précédentes, comprenant en outre une étape initiale de réception d'une indication de la forme de l'objet donné (2), et une étape ultérieure d'ajustement de la sous-zone (21) à ladite forme.

**11.** Procédé selon l'une quelconque des revendications précédentes, dans lequel l'objet (2) est un lit, de préférence un lit d'hôpital.

**12.** Programme informatique qui est stocké sur un support de mémoire lisible par ordinateur comprenant des instructions pour amener un ordinateur à effectuer le procédé selon l'une quelconque des revendications 1 à 11.

**13.** Ensemble capteur pour capturer des images (50) d'une zone surveillée (20) qui comprend au moins une sous-zone (21), ladite sous-zone (21) étant associée à un objet donné dans la zone surveillée (20) et des instructions de surveillance dédiées lui étant affectées, ledit ensemble capteur comprenant une unité de caméra (13, 14) pour capturer lesdites images (50); une unité de calcul pour traiter lesdites images (50) en fonctions desdites instructions de surveillance; et une unité de calibrage qui est utilisable pour:

estimer l'orientation approximative de l'unité de caméra (13, 14);
obtenir les dimensions d'un objet standard (5) qui correspond au dit objet donné,
définir, sur la bases desdites dimensions et de ladite orientation approximative, une zone de recherche d'objet (40) qui est une partie limitée de la zone surveillée (20) et à l'intérieur de laquelle au moins une partie de l'objet donné est censée se trouver,
identifier l'objet donné (2) dans ladite zone de recherche d'objet (40) dans l'une desdites images, et
définir automatiquement ladite au moins une sous-zone (21) sur la base de l'emplacement de l'objet donné (2) dans l'image (50).

**14.** Ensemble capteur selon la revendication 13, dans lequel l'unité de calibrage (11 ) est utilisable pour définir la zone de recherche d'objet (40) qui est une partie limitée de la zone surveillée (20) et à l'intérieur de laquelle au moins une partie de l'objet est censée se trouver, et pour identifier l'objet donné (2) dans ladite zone de recherche d'objet (40).

**15.** Ensemble capteur selon la revendication 14, comprenant en outre une mémoire (16) qui est utilisable pour stocker les dimensions de la zone de recherche d'objet (40), dans lequel l'unité de calibrage (11), dans la définition de ladite zone de recherche d'objet (40), est utilisable pour extraire lesdites dimensions de ladite mémoire (16).

**16.** Ensemble capteur selon la revendication 13, 14 ou 15, dans lequel l'unité de caméra (13, 14) est montée à l'intérieur d'une zone de positionnement de capteur (30), qui est définie en association avec la zone surveillée (20) de sorte que l'agencement de l'unité de caméra (13, 14) par rapport à l'objet (2) soit une approximation d'un agencement souhaité.

**17.** Ensemble capteur selon l'une quelconque des revendications 13 à 16, dans lequel ladite unité de caméra, ladite unité de calcul et ladite unité de calibrage sont situées dans la même enceinte physique.

**Fig. 1**

**Fig. 4**

Fig. 2c

Fig. 2b

Fig. 2a

100 — Mount sensor unit

110 — Calculate boundary lines of standard object

120 — Calculate derivative of pixels

130 — Select respective pixel with greatest derivative

140 — Interconnect all edge pixels found

150 — Adjust boundary lines to known shape

Fig. 3

**REFERENCES CITED IN THE DESCRIPTION**

**Patent documents cited in the description**

- WO 9606368 A
- SE 0201753 W
- WO 03027977 A